# EUROPEAN PATENT APPLICATION

(11) **EP 2 555 548 A1**
(43) Date of publication of application: **06.02.2013**
(21) Application number: 11765783.3
(22) Date of filing: 31.03.2011
(51) Int. Cl.: H04W 8/26, H04W 80/04, H04W 92/24

(54) **MOBILE COMMUNICATION METHOD AND GATEWAY APPARATUS**

(30) Priority: 31.03.2010 JP 2010083258
(71) Applicant: NTT DOCOMO, INC., Chiyoda-ku Tokyo 100-6150 (JP)
(72) Inventor: NISHIDA, Katsutoshi, Tokyo 100-6150 (JP); KUNITOMO, Koichiro, Tokyo 100-6150 (JP); ISHIKAWA, Taro, Tokyo 100-6150 (JP); OHASHI, Aki, Tokyo 100-6150 (JP)
(74) Representative: HOFFMANN EITLE
(86) International application number: PCT/JP2011/058295
(87) International publication number: WO 2011/125883

(57) **Abstract**

A mobile communication method according to the present invention includes a step in which the gateway apparatus P-GW transmits "Proxy Binding Acknowledgement containing "O Flag setting information" indicating whether or not a DNSv6 address is allocated to the mobile station UE to the gateway apparatus S-GW in response to the reception of the "Proxy Binding Update", and a step in which the gateway apparatus S-GW instructs the mobile station UE that there is no need to acquire a DNSv6 address using a DHCP request signal with "O Flag" in RA when the received "O Flag setting information" indicates that a DNSv6 address is allocated to the mobile station UE.

## Description

### TECHNICAL FIELD

The present invention relates to a mobile communication method and a gateway apparatus.

### BACKGROUND ART

In TS 23.401/TS23.402/TS24.008 of 3GPP standards, there has been known a method of notifying a mobile station UE of an IP address of DNSv6 (Domain Name System version 6) (hereinafter, a DNSv6 address).

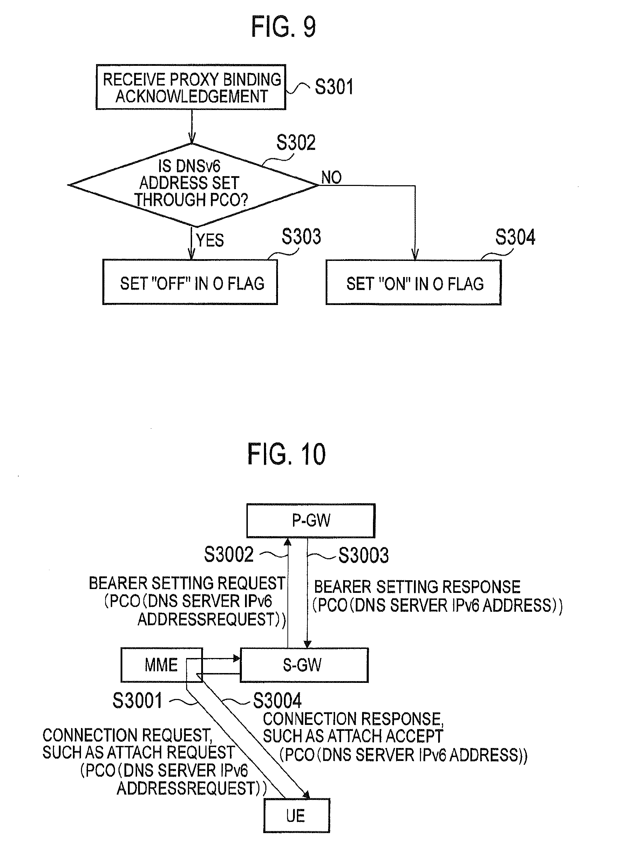

According to this method, as shown in Fig. 10, a gateway apparatus P-GW (a PDN Gateway) is configured to notify a mobile station UE of a DNSv6 address through PCO (Protocol Configuration Option) exchanged between the mobile station UE and the gateway apparatus P-GW.

Also, in an EPC (Evolved Packet Core) network employing a GTP (GPRS Tunneling Protocol) described in TS23.401 of 3GPP standards, the gateway apparatus P-GW is configured to notify the mobile station UE of RA (Routing Advertisement) (not shown).

Accordingly, the gateway apparatus P-GW sets "ON" for "O Flag" in RA when the gateway apparatus P-GW does not notify the mobile station of a DNSv6 address.

Here, the mobile station is configured to acquire the DNSv6 address in accordance with a DHCPv6 (Dynamic Host Configuration Protocol version 6) when the mobile station UE receives the RA in which "O Flag" is set to "ON" (see, RFC4861).

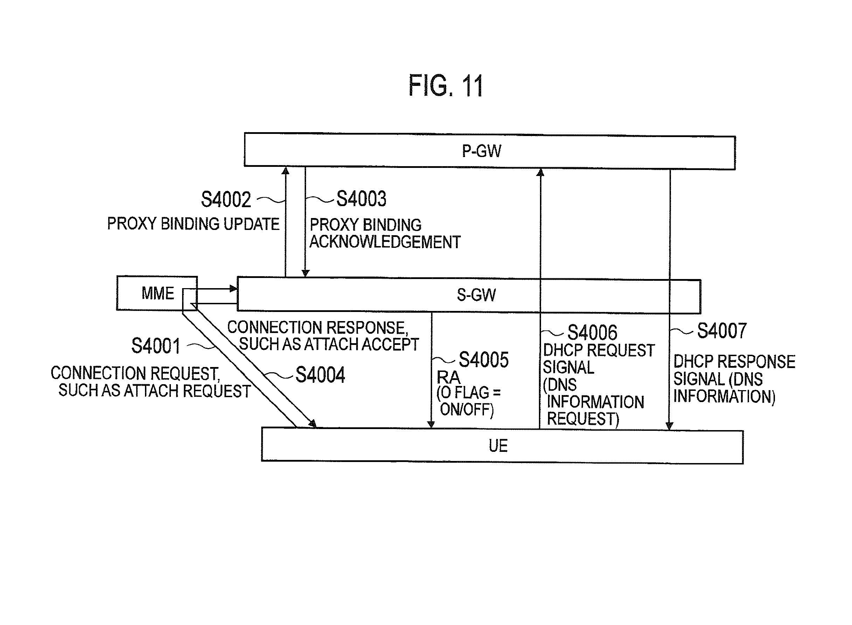

On the other hand, in an EPC network employing a PMIPv6 (Proxy Mobile IP version 6) described in TS23.402 of 3GPP standards, a gateway apparatus S-GW is configured to notify a mobile station UE of RA as shown in Fig. 11.

### PRIOR ART DOCUMENT

### NON-PATENT DOCUMENT

- NON-PATENT DOCUMENT 1:: 3GPP TS23.401
- NON-PATENT DOCUMENT 2:: 3GPP TS23.402
- NON-PATENT DOCUMENT 3:: 3GPP TS24.008

### SUMMARY OF THE INVENTION

### PROBLEMS TO BE SOLVED BY THE INVENTION

In the EPC network employing the PMIPv6, the gateway apparatus S-GW does not have means for knowing whether or not the gateway apparatus P-GW notifies the mobile station UE of the DNSv6 address allocation through the PCO.

For this reason, the setting of "O Flag" in RA transmitted by the gateway apparatus S-GW is determined by the network setting or the like which is made in advance.

In general, the notification of the DNSv6 address through the PCO is an optional function. Thus, it is assumed that "O Flag" is always set to "ON" in RA.

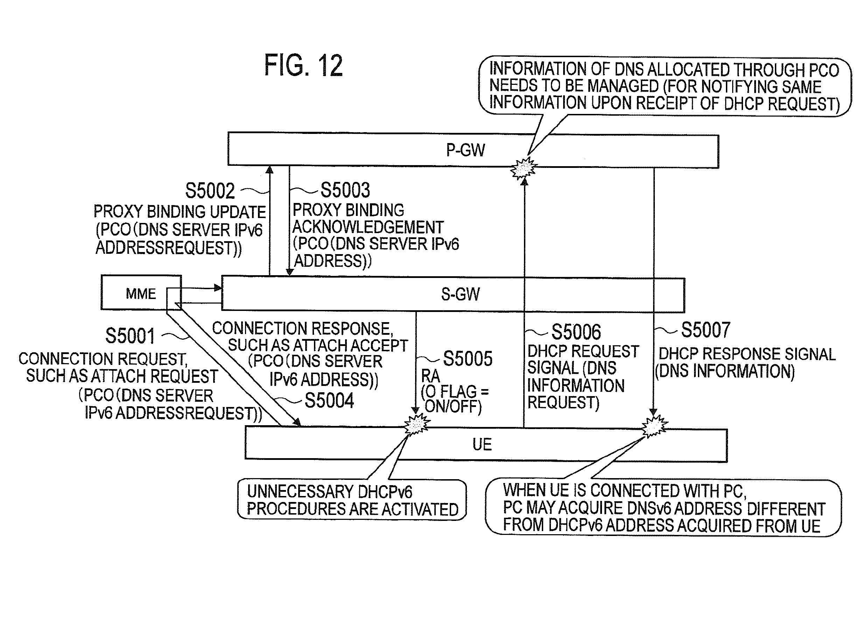

In such a case, as shown in Fig. 12, although the gateway apparatus P-GW notifies the mobile station UE of a DNSv6 address through the PCO, the mobile station tries to acquire a DNSv6 address with the DHCPv6 according to the thereafter received "O Flag" set to "ON," which results in performing unnecessary procedures. Thus, there is a problem that radio resources and network resources are unnecessarily consumed.

Also, as shown in Fig. 12, when the mobile station UE is a data card type and is connected with a PC (Personal Computer) or the like, the PC receives RA and executes the DHCP procedures based on the "O Flag" in the RA.

Accordingly, there is a problem that, in the DHCP procedures, the PC may acquire a DNSv6 address different from the DNSv6 address notified by the mobile station UE (the DNSv6 address received by the mobile station UE from the gateway apparatus P-GW through the PCO).

Furthermore, as shown in Fig. 12, there is a problem that the gateway apparatus P-GW has to manage the DNSv6 address allocated to each mobile station UE in preparation for receiving a DHCP request signal from the mobile station UE.

For this reason, the present invention has been made with a view to the foregoing problems, and has an objective to provide a mobile communication method and a gateway apparatus, which can solve the problems in the EPC network employing the above-described PMIPv6.

### MEANS FOR SOLVING THE PROBLEM

The first feature of the present invention is summarized in that a mobile communication method, including a step A of transmitting a predetermined signal from a first gateway apparatus to a second gateway apparatus when the first gateway apparatus receives a connection request transmitted by a mobile station, a step B of transmitting a response signal to the first gateway apparatus from the second gateway apparatus in response to the reception of the predetermined signal, the response signal containing setting information indicating whether DNS address information is allocated to the mobile station, and a step C of instructing, by the first gateway apparatus, the mobile station that there is no need to acquire DNS address information using a DHCP request signal, when the received setting information indicates that DNS address information is allocated to the mobile station.

The second feature of the present invention is summarized in that a mobile communication method, including a step A of transmitting a predetermined signal from a first gateway apparatus to a second gateway apparatus when the first gateway apparatus receives a connection request transmitted by a mobile station, a step B of transmitting a response signal to the received predetermined signal to the first gateway apparatus from the second gateway apparatus, and a step C of instructing, by the first gateway apparatus, the mobile station that there is no need to acquire DNS address information using a DHCP request signal when DNS address information is contained in the received response signal.

The third feature of the present invention is summarized in that a gateway apparatus functioning as a second gateway apparatus connected with a first gateway apparatus, including a predetermined signal receiver configured to receive a predetermined signal from the first gateway apparatus, and a response signal transmitter configured to transmit a response signal containing setting information indicating whether DNS address information is allocated to the mobile station to the first gateway apparatus, in response to the reception of the predetermined signal.

The fourth feature of the present invention is summarized in that a gateway apparatus functioning as a first gateway apparatus connected with a second gateway apparatus, including a predetermined signal transmitter configured to transmit a predetermined signal to the second gateway apparatus, when a connection request transmitted by a mobile station is received; and an instruction unit configured to instruct the mobile station that there is no need to acquire DNS address information using a DHCP request signal, when setting information contained in a response signal received from the second gateway apparatus as a response to the predetermined signal indicates that DNS address information is allocated to the mobile station.

The fifth feature of the present invention is summarized in that a gateway apparatus functioning as a first gateway apparatus connected with a second gateway apparatus, including a predetermined signal transmitter configured to transmit a predetermined signal to the second gateway apparatus when a connection request transmitted by a mobile station is received, and an instruction unit configured to instruct the mobile station that there is no need to acquire DNS address information using a DHCP request signal when DNS address information is contained in a response signal received from the second gateway apparatus as a response to the predetermined signal.

### EFFECTS OF THE INVENTION

As described above, the present invention can provide a mobile communication method and a gateway apparatus, which can solve the problems in the EPC network employing the above-described PMIPv6.

### BRIEF DESCRIPTION OF DRAWINGS

[Fig. 1] Fig. 1 is an entire configuration diagram of a mobile communication system according to a first embodiment of the present invention.
[Fig. 2] Fig. 2 is a functional block diagram of a gateway apparatus P-GW according to the first embodiment of the invention.
[Fig. 3] Fig. 3 is a drawing showing an example of an information element capable of being inserted into "Proxy Binding Acknowledgement" as "Mobility Option", which is transmitted by the gateway apparatus P-GW according to the first embodiment of the invention.
[Fig. 4] Fig. 4 is a functional block diagram of a gateway apparatus S-GW according to the first embodiment of the invention.
[Fig. 5] Fig. 5 is a drawing for illustrating an operation of the mobile communication system according to the first embodiment of the invention.
[Fig. 6] Fig. 6 is a flowchart for illustrating an operation of the gateway apparatus P-GW according to the first embodiment of the invention.
[Fig. 7] Fig. 7 is a flowchart for illustrating an operation of the gateway apparatus S-GW according to the first embodiment of the invention.
[Fig. 8] Fig. 8 is a drawing for illustrating an operation of a mobile communication system according to a second embodiment of the invention.
[Fig. 9] Fig. 9 is a flowchart for illustrating an operation of the gateway apparatus S-GW according to the second embodiment of the invention.
[Fig. 10] Fig. 10 is a drawing for illustrating an operation of a conventional mobile communication system.
[Fig. 11] Fig. 11 is a drawing for illustrating an operation of the conventional mobile communication system.
[Fig. 12] Fig. 12 is a drawing for illustrating a problem of the conventional mobile communication system.

### MODES FOR CARRYING OUT THE INVENTION

### (Mobile Communication System according to First Embodiment of the Invention)

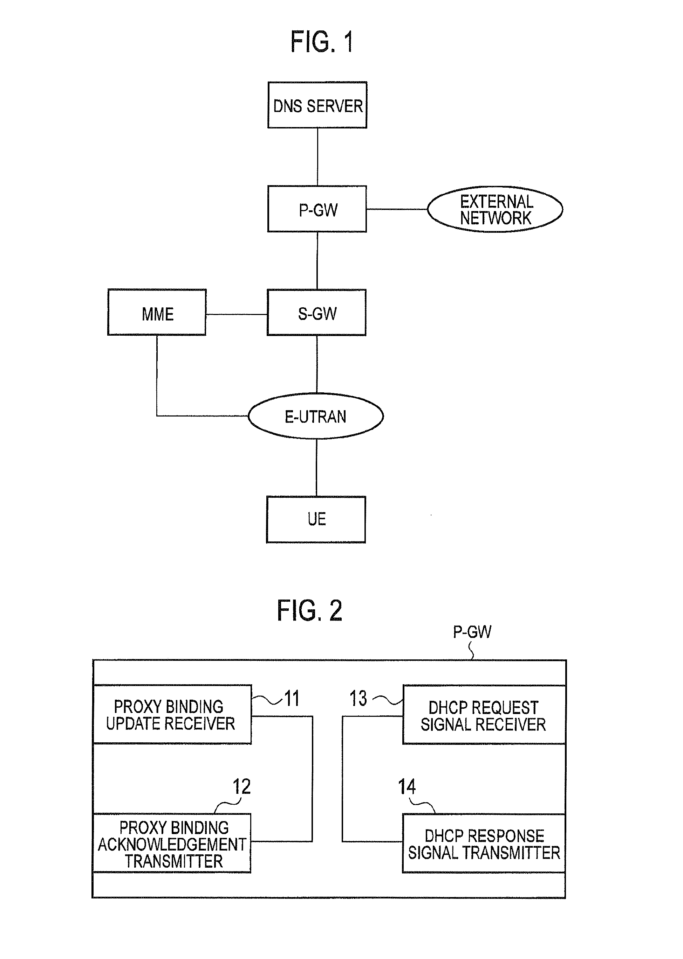

Referring to Figs. 1 to 7, a mobile communication system according to a first embodiment of the present invention is described.

As shown in Fig. 1, the mobile communication system according the present embodiment includes a radio access system (E-UTRAN: Evolved Universal Terrestrial Radio Access Network) in the LTE (Long Term Evolution) scheme, a mobile management node MME (Mobile Management Entity), a gateway apparatus S-GW, a gateway apparatus P-GW, and a DNS server.

Note that the mobile communication system according to the present embodiment is a mobile communication system in the EPC network employing a PMIPv6.

Also, the present invention is applicable to the EPC network which employs a PMIPv6 and accepts other radio access systems (e.g., a radio access system in a 3GPP2 scheme and a radio access system in the WLAN scheme).

As shown in Fig. 2, the gateway apparatus P-GW includes a Proxy Binding Update receiver 11, a Proxy Binding Acknowledgement transmitter 12, a DHCP request signal receiver 13, and a DHCP response signal transmitter 14.

The Proxy Binding Update receiver 11 is configured to receive "Proxy Binding Update" from the gateway apparatus S-GW.

The Proxy Binding Acknowledgement transmitter 12 is configured to transmit "Proxy Binding Acknowledgement" to the gateway apparatus S-GW through PCO in response to the reception of the "Proxy Binding Update". The "Proxy Binding Acknowledgement" contains "O flag setting information" indicating whether a DNSv6 address is allocated to a mobile station UE.

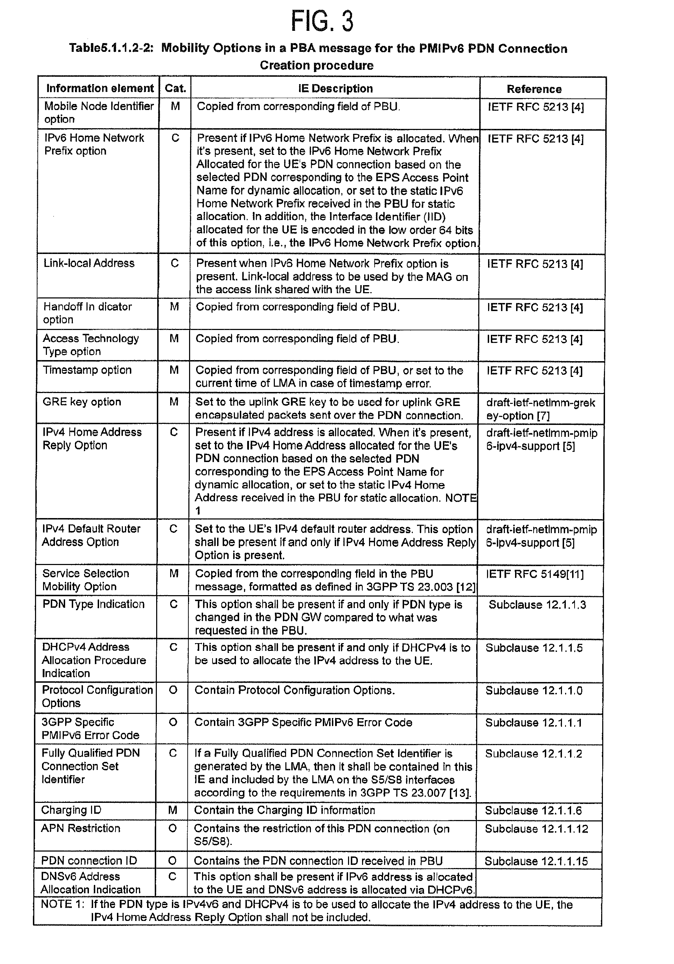

For example, as shown in Fig. 3, the Proxy Binding Acknowledgement transmitter 12 may be configured to transmit "O Flag setting information" with an information element, e.g., "DNSv6 Address Allocation Indication", capable of being inserted into the "Proxy Binding Acknowledgement" in Table 5.1.1.2-2 in 3GPP standards TS29.275 as "Mobility Option."

Here, when the DNSv6 address is allocated to the mobile station UE through the PCO, the Proxy Binding Acknowledgement transmitter 12 may set "unnecessary" for the "O Flag setting information".

On the other hand, when the DNSv6 address is not allocated to the mobile station UE through the PCO, the Proxy Binding Acknowledgement transmitter 12 may set "necessary" for the "O Flag setting information."

Note that, when the DNSv6 address is not allocated to the mobile station UE through the PCO, the Proxy Binding Acknowledgement transmitter 12 does not need to contain the "O Flag setting information" in the "Proxy Binding Acknowledgement."

Also, for each APN, the Proxy Binding Acknowledgement transmitter 12 may determine which one of "necessary" and "unnecessary" should be set in the "O Flag setting information".

For example, when the mobile station UE transmits a connection request to a specific APN, the Proxy Binding Acknowledgement transmitter 12 may be configured to always set either "necessary" or "unnecessary" in the "O Flag setting information."

The DHCP request signal receiver 13 is configured to receive a DHCP request signal containing a DNS information request transmitted by the mobile station UE.

The DHCP response signal transmitter 14 is configured to transmit a DHCP response signal containing DNS information (a DNSv6 address) to the mobile station UE in response to the DHCP request signal containing the DNS information request received by the DHCP request signal receiver 13.

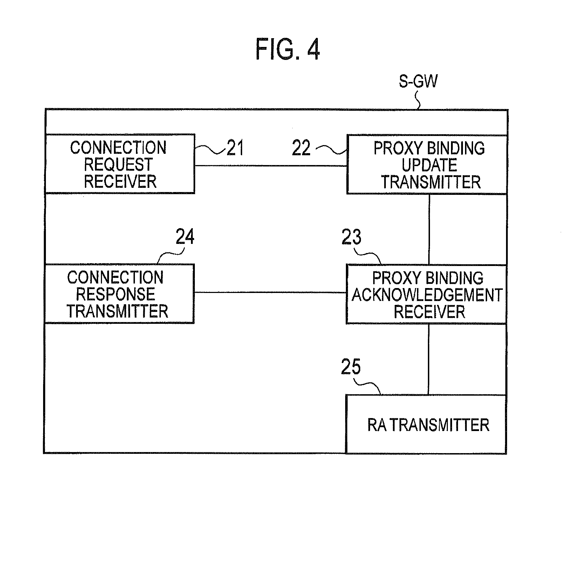

As shown in Fig. 4, the gateway apparatus S-GW includes a connection request receiver 21, a Proxy Binding Update transmitter 22, a Proxy Binding Acknowledgement transmitter 23, a connection response transmitter 24, and a RA transmitter 25.

The connection request receiver 21 is configured to receive a connection request (e.g., an Attach Request or the like) transmitted by the mobile station UE via a mobile management node MME.

When the connection request receiver 21 receives a connection request, the Proxy Binding Update transmitter 22 is configured to transmit "Proxy Binding Update" to the gateway apparatus P-GW.

The Proxy Binding Acknowledgement receiver 23 is configured to receive the "Proxy Binding Acknowledgement" transmitted by the gateway apparatus P-GW.

When the Proxy Binding Acknowledgement receiver 23 receives the "Proxy Binding Acknowledgement", the connection response transmitter 24 is configured to transmit a connection response (e.g., an Attach Accept or the like) to the mobile station UE via the mobile management node MME.

The RA transmitter 25 is configured to transmit RA containing "O Flag" for which "ON" or "OFF" is set to the mobile station UE when the Proxy Binding Acknowledgement receiver 23 receives the "Proxy Binding Acknowledgement."

For example, the RA transmitter 25 can gives an instruction to acquire a DNSv6 address using the DHCP request signal by transmitting RA containing the "O Flag" for which "ON" is set to the mobile station UE.

On the other hand, the RA transmitter 25 can gives such an instruction that acquisition of a DNSv6 address using the DHCP request signal is not needed by transmitting RA containing the "O Flag" for which "OFF" is set to the mobile station UE.

Here, the RA transmitter 25 is configured to determine which one of "ON" and "OFF" should be set in the " "O Flag" of the RA based on the "O Flag setting information" contained in the "Proxy Binding Acknowledgement" received by the Proxy Binding Acknowledgement receiver 23.

For example, when "necessary" is set in the "O Flag setting information", the RA transmitter 25 may be configured to set "ON" for the "O Flag."

On the other hand, when "unnecessary" is set in the "O Flag setting information", the RA transmitter 25 may be configured to set "OFF" for the "O Flag".

Note that the RA transmitter 25 may be configured to set "OFF" in the "O Flag" with respect to the mobile station UE when the "O Flag setting information" is not contained in the "Proxy Binding Acknowledge" received by the Proxy Binding Acknowledgement receiver 23.

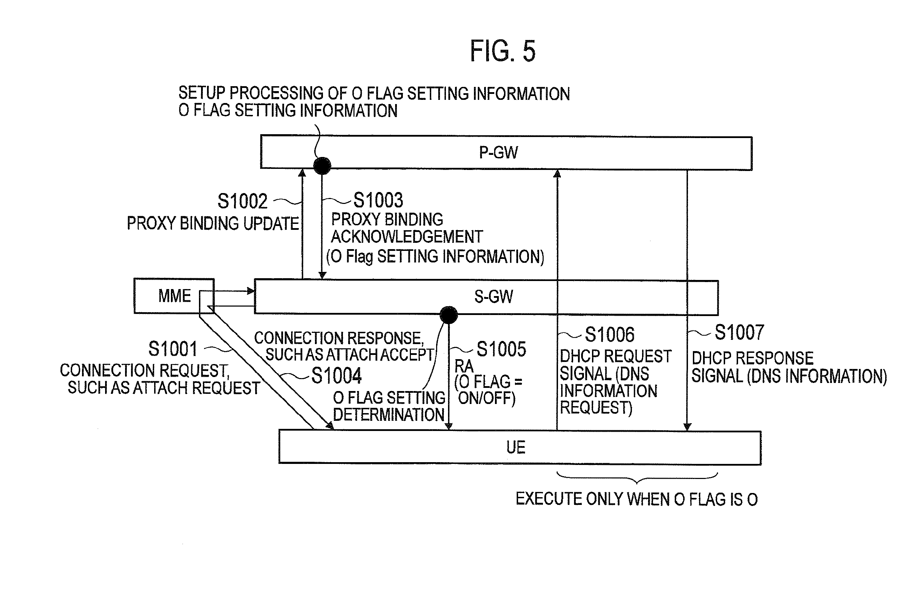

Hereinafter, referring to Figs. 5 to 7, an operation of the mobile communication system according to the present modification is described.

Firstly, referring to Fig. 5, the description is given to an operation in which a mobile station UE transmits a connection request in the mobile communication system according to the present embodiment.

As shown in Fig. 5, when the mobile station UE transmits a connection request to the gateway apparatus S-GW via the mobile management node MME at step S1001, the gateway apparatus S-GW transmits "Proxy Binding Update" to the gateway apparatus P-GW at step S1002.

At step S1003, the gateway apparatus P-GW sets either "necessary" or "unnecessary" for the "O Flag setting information" before transmitting "Proxy Binding Acknowledgement" containing such "O Flag setting information" to the gateway apparatus S-GW.

At step S1004, the gateway apparatus S-GW having received such "Proxy Binding Acknowledgement" transmits a connection response to the mobile station UE via the mobile management node MME.

At step S1005, the gateway apparatus S-GW sets either "ON" or "OFF" for the "O Flag" before transmitting RA containing such "O Flag" to the mobile station UE.

When "ON" is set in the "O Flag" contained in the received RA, the mobile station UE transmits a DHCP request signal containing the DNS information request to the gateway apparatus P-GW at step S1006.

Here, when "OFF" is set in the "O Flag" contained in the received RA, the mobile station UE does not transmit a DHCP request signal containing the DNS information request to the gateway apparatus P-GW.

At step S1007, the gateway apparatus P-GW transmits a DHCP response request signal containing the DNS information (the DNSv6 address) to the mobile station UE.

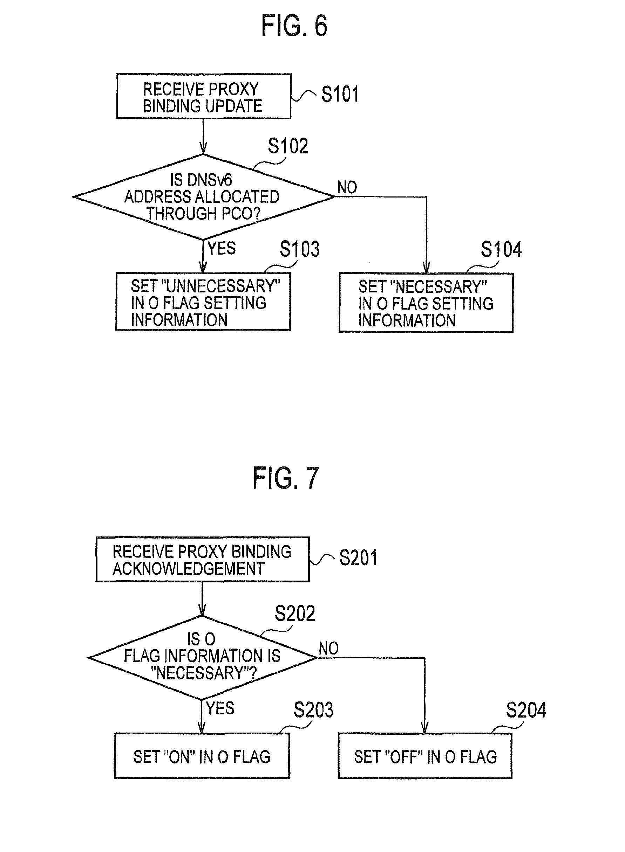

Secondly, referring to Fig. 6, the description is given to an operation of the gateway apparatus P-GW according to the present embodiment.

As shown in Fig. 6, when receiving "Proxy Binding Update" at step S101, the gateway apparatus P-GW determines whether or not a DNSv6 address is allocated to the mobile station according to PCO at step S102.

When the DNSv6 address is allocated to the mobile station UE through the PCO, the gateway apparatus P-GW sets "unnecessary" for the "O Flag setting information" at step S103.

On the other hand, when the DNSv6 address is not allocated to the mobile station UE through the PCO, the gateway apparatus P-GW sets "necessary" for the "O Flag setting information" at step S104.

Note that at step S102, for each APN which is a target of the connection request made by the mobile station UE, the gateway apparatus P-GW may determine which one of "necessary" and "unnecessary" should be set in the "O Flag setting information."

Thirdly, referring to Fig. 7, the description is given to an operation of the gateway apparatus S-GW according to the present embodiment.

As shown in Fig. 7, when receiving the "Proxy Binding Acknowledgement" at step S201, the gateway apparatus S-GW determines the setting contents of the "O Flag setting information" contained in the received "Proxy Binding Acknowledgement" at step S202.

When "necessary" is set in the "O Flag setting information", the gateway apparatus S-GW sets "ON" for the "O Flag" in RA to be transmitted at step S203.

On the other hand, when "unnecessary" is set in the "O Flag setting information", the gateway apparatus S-GW sets "OFF" for the "O Flag" in RA to be transmitted at step S204.

Note that at step S202, when the "O Flag setting information" is not contained in the received "Proxy Binding Acknowledgement, " the gateway apparatus S-GW may set "OFF" for the "O Flag" in RA to be transmitted. According to the mobile communication system according to the present embodiment, when the mobile station UE is notified of the DNSv6 address allocation through the PCO, the gateway apparatus S-GW can set "OFF" for the "O Flag" in RA.

Accordingly, the mobile communication system according to the present embodiment can avoid unnecessary execution of DHCP procedures in the EPC network employing the PMIPv6, and thus can avoid unnecessary consumption of radio resources and network resources.

Also, in the DHCP procedures, the mobile communication system according to the present embodiment can prevent the PC from acquiring a DNSv6 address different from the DNSv6 address transmitted by the mobile station UE (the DNSv6 address received through the PCO) even when the mobile station UE is a data card type and is connected with the PC or the like.

Furthermore, according to the mobile communication system according to the embodiment, the gateway apparatus P-GW does not need to manage the DNSv6 address allocated to each mobile station UE in preparation for receiving the DHCP request signal from the mobile station UE.

### (Mobile Communication System according to Second Embodiment of the Invention)

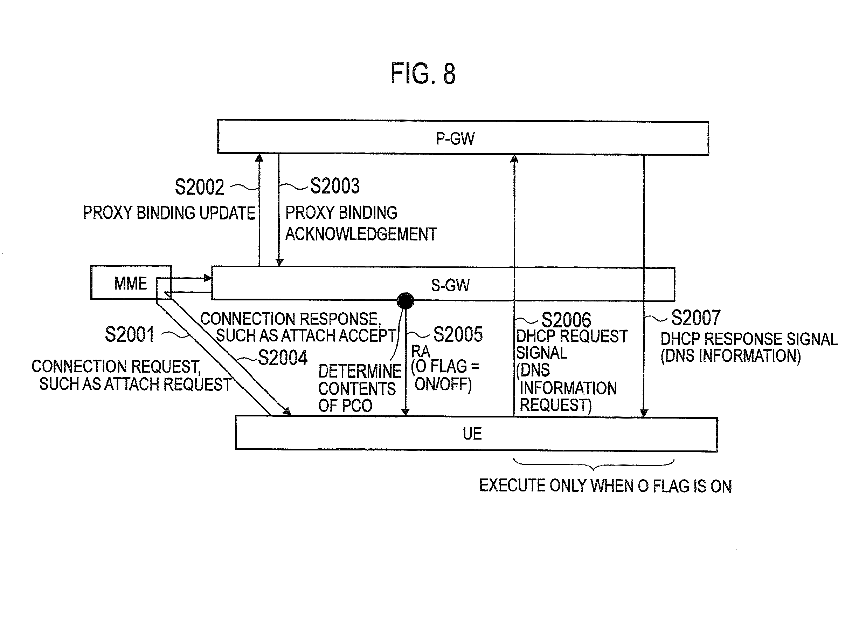

Referring to Figs. 8 and 9, a mobile communication system according to a second embodiment of the invention is described. The mobile communication system according to the present embodiment is described below by paying attention to differences from the mobile communication system according to the above-described first embodiment.

Firstly, referring to Fig. 8, the description is given to an operation in which a mobile station UE transmits a connection request in the mobile communication system according to the present embodiment.

As shown in Fig. 8, when the mobile station UE transmits a connection request to the gateway apparatus S-GW via the mobile management node MME at step S2001, the gateway apparatus S-GW having received such connection request transmits "Proxy Binding Update" to the gateway apparatus P-GW at step S2002.

At step S2003, the Proxy Binding Acknowledgement transmitter 12 of the gateway apparatus P-GW transmits "Proxy Binding Acknowledgement" which does not contain such "O Flag setting information" to the gateway apparatus S-GW.

At step S2004, the gateway apparatus S-GW having received such "Proxy Binding Acknowledgement" transmits a connection response to the mobile station UE via the mobile management node MME.

At step S2005, the Proxy Binding Acknowledgement receiver 23 of the gateway apparatus S-GW analyses the contents of the "Proxy Binding Acknowledgement" and determines whether or not a DNSv6 address is contained in such "Proxy Binding Acknowledgement."

Specifically, the Proxy Binding Acknowledgement receiver 23 of the gateway apparatus S-GW determines whether or not "PCO (a DNS Server IPv6 Address) " is contained in the "Proxy Binding Acknowledgement".

Then, the RA transmitter 25 of the gateway apparatus S-GW sets either "ON" or "OFF" for the "O Flag" based on the determination result before transmitting RA containing such "O Flag" to the mobile station UE.

In other words, when it is determined that the DNSv6 address is contained in the "Proxy Binding Acknowledgement", the RA transmitter 25 of the gateway apparatus S-GW sets "OFF" for the "O Flag."

On the other hand, when it is determined that the DNSv6 address is not contained in the "Proxy Binding Acknowledgement," the RA transmitter 25 of the gateway apparatus S-GW sets "ON" for the "O Flag".

When "ON" is set in the "O Flag" contained in the received RA, the mobile station UE transmits a DHCP request signal containing the DNS information request to the gateway apparatus P-GW at step S2006.

Here, when "OFF" is set in the "O Flag" contained in the received RA, the mobile station UE does not transmit the DHCP request signal containing the DNS information request to the gateway apparatus P-GW.

At step S2007, the gateway apparatus P-GW transmits a DHCP response request signal containing the DNS information (the DNSv6 address) to the mobile station UE.

Secondly, referring to Fig. 9, the description is given to an operation of the gateway apparatus S-GW according to the present embodiment.

As shown in Fig. 9, when receiving the "Proxy Binding Acknowledgement" at step S301, the gateway apparatus S-GW determines whether or not "PCO (a DNS Server IPv6Address) " is contained in the received "Proxy Binding Acknowledgement" at step S302.

When the "PCO (the DNS Server IPv6Address) " is contained, the gateway apparatus S-GW sets "OFF" for the "O Flag" at step S303.

On the other hand, when the "PCO (the DNS Server IPv6Address) " is not contained, the gateway apparatus S-GW sets "ON" for the "O Flag" at step S304.

The characteristics of the above-described embodiments may be expressed as follows.

A first characteristic of the present embodiment includes a step A in which a gateway apparatus S-GW (a first gateway apparatus) transmits "Proxy Binding Update (a predetermined signal)" to a gateway apparatus P-GW (a second gateway apparatus) when receiving a connection request transmitted by a mobile station UE, a step B in which the gateway apparatus P-GW transmits "Proxy Binding Acknowledgement (a response signal)" containing "O Flag setting information (setting information)" indicating whether or not a DNSv6 address (DNS address information) is allocated to the mobile station UE to the gateway apparatus S-GW in response to the reception of the "Proxy Binding Update", and a step C in which the gateway apparatus S-GW instructs the mobile station UE that there is no need to acquire a DNSv6 address using a DHCP request signal with "O Flag" in RA when the received "O Flag setting information" indicates that a DNSv6 address is allocated to the mobile station UE.

In the first characteristic of the present embodiment, in the step C, the gateway apparatus S-GW may instruct the mobile station UE to acquire a DNSv6 address using the DHCP request signal with the "O Flag" in RA when the "O Flag setting information" is not contained in the received "Proxy Binding Acknowledgement."

A second characteristic of the present invention includes a step A in which the gateway apparatus S-GW transmits "Proxy Binding Update" to the gateway apparatus P-GW when receiving a connection request transmitted by the mobile station UE, a step B in which the gateway apparatus P-GW transmits "Proxy Binding Acknowledgement" to the gateway apparatus S-GW in response to the received "Proxy Binding Update," and a step C in which the gateway apparatus S-GW instructs the mobile station UE that there is no need to acquire a DNSv6 address using the DHCP request signal with the "O Flag" in RA when DNSv6 address is contained in the received "Proxy Binding Acknowledgement."

A third characteristic of the present embodiment is a gateway apparatus P-GW including a Proxy Binding Update receiver (a predetermined signal receiver) 11 configured to receive "Proxy Binding Update" from the gateway apparatus S-GW and a Proxy Binding Acknowledgement transmitter (a response signal transmitter) 12 configured to transmit "Proxy Binding Acknowledgement" containing "O Flag setting information" indicating whether or not a DNSv6 address is allocated to the mobile station UE to the gateway apparatus S-GW in response to the reception of the "Proxy Binding Update."

A fourth characteristic of the present embodiment is a gateway apparatus S-GW including a Proxy Binding Update transmitter (a predetermined signal transmitter) 22 configured to transmit "Proxy Binding Update" to the gateway apparatus P-GW when a connection request transmitted by the mobile station UE is received and a RA transmitter (an instruction unit) 25 configured to instruct the mobile station UE that there is no need to acquire DNSv6 address using the DHCP request signal with the "O Flag" in RA when the "O Flag setting information" contained in the "Proxy Binding Acknowledgement" received from the gateway apparatus P-GW as a response to the "Proxy Binding Update" indicates that a DNSv6 address is allocated to the mobile station UE.

In the fourth characteristic of the present embodiment, the RA transmitter 25 may be configured to instruct the mobile station UE to acquire a DNSv6 address using the DHCP request signal with the "O Flag" in RA when the "O Flag setting information" is not contained in the received "Proxy Binding Acknowledgement."

A fifth characteristic of the present embodiment is a gateway apparatus S-GW including a Proxy Binding Update transmitter 11 configured to transmit "Proxy Binding Update" to the gateway apparatus P-GW when a connection request transmitted by the mobile station UE is received and a RA transmitter 25 configured to instruct the mobile station UE that there is no need to acquire a DNSv6 address using the DHCP request signal with the "O Flag" in RA when a DNSv6 address is contained in the "Proxy Binding Acknowledgement" received from the gateway apparatus P-GW in response to the "Proxy Binding Update."

Note that operations of the above-described gateway apparatus S-GW, the gateway apparatus P-GW, and the mobile station UE may be implemented by hardware or may be implemented by a software module executed by a processor, or may be implemented in combination of the both.

The software module may be provided any form of recording medium such as a RAM (Random Access Memory), a flash memory, a ROM (Read Only Memory), an EPROM (Erasable Programmable ROM), an EEPROM (Electronically Erasable and Programmable ROM), a register, a hard disk, removable disk, or a CD-ROM.

Such recording medium is connected with a processor so that the processor can read and write information on the recording medium. Also, such recording medium may be integrated on the processor. Or, such recording medium and the processor may be provided inside ASI. Such ASIC may be provided in the gateway apparatus S-GW, the gateway apparatus P-GW, and the mobile station UE. Also, such recording medium and processor may be provided in the gateway apparatus S-GW, the gateway apparatus P-GW, and the mobile station UE as a discrete component.

As described above, the present invention has been described in detail using the above-described embodiments. However, it will be apparent for those who are in the art that the present invention is not limited to the embodiments described herein. The present invention can be implemented as amendments and modified aspects without departing from the scope and spirit thereof, which is defined by the description of the scope of claims. Accordingly, the description herein intends only an illustration and does not mean any limitation to the invention.

### INDUSTRIAL APPLICABILITY

As described above, the present invention can provide a mobile communication method and a gateway apparatus, which can solve problems in the EPC network employing the above-described PMIPv6.

### EXPLANATION OF THE REFERENCE NUMERALS

- P-GW, S-GW: gateway apparatus
- 11: Proxy Binding Update receiver
- 12: Proxy Binding Acknowledgement transmitter
- 13: DHCP request signal receiver
- 14: DHCP response signal transmitter
- 21: connection request receiver
- 22: Proxy Binding Update transmitter
- 23: Proxy Binding Acknowledgement receiver
- 24: connection response transmitter
- 25: RA transmitter

## Claims

1. A mobile communication method, comprising:
a step A of transmitting a predetermined signal from a first gateway apparatus to a second gateway apparatus when the first gateway apparatus receives a connection request transmitted by a mobile station;
a step B of transmitting a response signal to the first gateway apparatus from the second gateway apparatus in response to the reception of the predetermined signal, the response signal containing setting information indicating whether DNS address information is allocated to the mobile station; and
a step C of instructing, by the first gateway apparatus, the mobile station that there is no need to acquire DNS address information using a DHCP request signal, when the received setting information indicates that DNS address information is allocated to the mobile station.

2. The mobile communication method according to claim 1, wherein in the step C, the first gateway apparatus instructs the mobile station to acquire DNS address information using the DHCP request signal when the setting information is not contained in the received response signal.

3. A mobile communication method, comprising:
a step A of transmitting a predetermined signal from a first gateway apparatus to a second gateway apparatus when the first gateway apparatus receives a connection request transmitted by a mobile station;
a step B of transmitting a response signal to the received predetermined signal to the first gateway apparatus from the second gateway apparatus; and
a step C of instructing, by the first gateway apparatus, the mobile station that there is no need to acquire DNS address information using a DHCP request signal when DNS address information is contained in the received response signal.

4. A gateway apparatus functioning as a second gateway apparatus connected with a first gateway apparatus, comprising:
a predetermined signal receiver configured to receive a predetermined signal from the first gateway apparatus; and
a response signal transmitter configured to transmit a response signal containing setting information indicating whether DNS address information is allocated to the mobile station to the first gateway apparatus, in response to the reception of the predetermined signal.

5. A gateway apparatus functioning as a first gateway apparatus connected with a second gateway apparatus, comprising:
a predetermined signal transmitter configured to transmit a predetermined signal to the second gateway apparatus, when a connection request transmitted by a mobile station is received; and
an instruction unit configured to instruct the mobile station that there is no need to acquire DNS address information using a DHCP request signal, when setting information contained in a response signal received from the second gateway apparatus as a response to the predetermined signal indicates that DNS address information is allocated to the mobile station.

6. The gateway apparatus according to claim 5, wherein the instruction unit instructs the mobile station to acquire DNS address information using the DHCP request signal when the setting information is not contained in the received response signal.

7. A gateway apparatus functioning as a first gateway apparatus connected with a second gateway apparatus, comprising:
a predetermined signal transmitter configured to transmit a predetermined signal to the second gateway apparatus when a connection request transmitted by a mobile station is received; and
an instruction unit configured to instruct the mobile station that there is no need to acquire DNS address information using a DHCP request signal when DNS address information is contained in a response signal received from the second gateway apparatus as a response to the predetermined signal.
